# EUROPEAN PATENT SPECIFICATION

(11) **EP 1 666 287 B1**
(45) Date of publication and mention of the grant of the patent: **02.01.2008**
(21) Application number: 05257341.7
(22) Date of filing: 29.11.2005
(51) Int. Cl.: B60H 1/32, B60H 1/00, F25B 49/02

(54) **Vehicle air conditioning system comprising a refrigerant recovery vessel**
Fahrzeugklimaanlage mit einem Auffangbehälter für das Kältemittel
Climatisation d'un véhicule comprenant un réservoir collecteur de fluide frigorigène

(30) Priority: 06.12.2004 JP 2004352399
(43) Date of publication of application: 07.06.2006
(73) Proprietor: Sanden Corporation, Isesaki-shi, Gunma 372-8502 (JP)
(72) Inventor: Suzuki, Kenichi c/o Sanden Corporation, Isesaki-shi Gunma 372-8502 (JP); Tsuboi, Masato c/o Sanden Corporation, Isesaki-shi Gunma 372-8502 (JP); Matsumoto, Yuuichi c/o Sanden Corporation, Isesaki-shi Gunma 372-8502 (JP)
(74) Representative: Haley, Stephen

(56) References cited:
- DE-A1- 4 207 859
- US-A- 5 007 247
- PATENT ABSTRACTS OF JAPAN vol. 2000, no. 09, 13 October 2000 (2000-10-13) & JP 2000 171130 A (MATSUSHITA ELECTRIC IND CO LTD), 23 June 2000 (2000-06-23)

## Description

The present invention relates to vehicle air conditioning systems including a vapor compression-type, refrigerating cycle and using combustible refrigerant, and, more specifically, to vehicle air conditioning systems having a mechanism which recovers refrigerant from the refrigerating cycle into a refrigerant recovery vessel, as needed.

In a known, vehicle air conditioning system, for example, in which Freon® refrigerant, commercially available from E.I. DuPont De Nemours and Co., of Wilmington Delaware USA, such as HFC134a refrigerant, is used as the refrigerant for a vapor compression-type refrigerating cycle, even if the refrigerant leaks, because it is incombustible, there is little or no risk of fire or explosion. Generally, such leaks are not considered to create significant risks.

Recently, in order to deal with global environmental concerns, much attention has been paid to the use of a vapor compression-type, refrigerating cycle using refrigerant having a low, heat coefficient. As a possible low heat coefficient refrigerant, natural system refrigerants, such as CO₂, and combustible refrigerants have been proposed. Nevertheless, in a known air conditioning system for vehicles, in which refrigerant in a vapor compression-type, refrigerating cycle is changed to combustible refrigerant, if the refrigerant leaks, there may be some risk of fire or explosion because the refrigerant is combustible, and, therefore, it is considered preferable to take measures to reduce, minimize, or eliminate the conditions favorable to such risks.

Although it does not relate to an air conditioning system for vehicles, a structure is known wherein a vessel is provided for recovering combustible refrigerant via the opening and closing operation of an electromagnetic valve of a vapor compression-type, refrigerating cycle using combustible refrigerant. See Japanese Patent Application No. JP-A-2000-171130 ("JP'130"). In the structure described in JP'130, however, because a pipe diverges from a refrigerant pipe between an expansion valve and an evaporator, and because a refrigerant recovery vessel is connected to the divergent pipe, even if this structure is applied to an air conditioning system for vehicles, a design change or alteration of the system would be required and is not easily applied. Further, it may not always be possible to efficiently recover refrigerant by extracting combustible refrigerant from the pipe provided between an expansion valve and an evaporator.

Accordingly, a need has arisen for an air conditioning system for vehicles which may recover refrigerant while reducing, minimizing, or eliminating leakage of the refrigerant and which may recover the refrigerant readily and efficiently without requiring significant changes to the system configuration, when combustible refrigerant is used as the refrigerant in a vapor compression-type, refrigerating cycle.

JP-A-2000/171130 discloses an air conditioning system for a vehicle with a vapour compression-type refrigerating cycle and which uses combustible refrigerant according to the preamble of claim 1.

According to the present invention there is provided an air conditioning system for vehicles comprising a vapor compression-type refrigerating cycle, which uses combustible refrigerant and comprises a gas-liquid separator, characterised by comprising;
a refrigerant recovery vessel in communication with said gas-liquid separator and which recovers said combustible refrigerant in said refrigerating cycle by communication with said gas-liquid separator; and
a valve which controls the communication between said refrigerant recovery vessel and said gas-liquid separator in response to an external signal.

In this air conditioning system, it is preferred that the gas-liquid separator and the refrigerant recovery vessel are integral to each other. Further, the valve may be integral with the gas-liquid separator and the refrigerant recovery vessel. Alternatively, a communication path for communicating between the gas-liquid separator and the refrigerant recovery vessel may be disposed at a position outside of the gas-liquid separator and the refrigerant recovery vessel, and the valve is disposed in the communication path.

Various structures may be employed to control refrigerant recovery. For example, a structure may be employed wherein a time period for recovering refrigerant by opening the valve is set at a predetermined time period, and after expiration of the predetermined time period, recovered refrigerant is enclosed by closing the valve. Further, a structure may be employed wherein a pressure detecting device detects a vessel pressure in the refrigerant recovery vessel or a separator pressure in the gas-liquid separator, when refrigerant is recovered by opening the valve, the valve then is closed in accordance with a detected pressure by the pressure detecting device. In this structure, when refrigerant has been recovered by opening the valve, the valve then may be closed when a detected pressure by the pressure detecting device equals or exceeds a predetermined pressure. Further, a structure may be employed wherein a vehicle collision detection device detects or predicts a vehicle collision, and when the vehicle collision is detected or predicted by the vehicle collision detection device, refrigerant in the gas-liquid separator is recovered into the refrigerant recovery vessel by opening the valve. Still further, a structure may be employed wherein a refrigerant leakage detection device detects a leakage of refrigerant in the refrigerating cycle, and when the refrigerant leakage is detected by the refrigerant leakage detection device, refrigerant in the gas-liquid separator is recovered into the refrigerant recovery vessel by opening the valve.

In addition, it is preferred that, when refrigerant in the gas-liquid separator is recovered into the refrigerant recovery vessel by opening the valve, a compressor provided in the refrigerating cycle is stopped.

Moreover, it is preferred that the valve is a valve driven by an electromagnetic solenoid and that the normally, closed-type valve is opened when the electromagnetic solenoid is energized.

In another embodiment, a method is provided for controlling leakage of refrigerant in an air conditioning system for vehicles comprising a gas-liquid separator, a refrigerant recovery vessel, and a selectively openable communication path therebetween. The method comprises the steps of: preselecting a predetermined parameter for stopping refrigerant recovery; detecting a leakage of refrigerant within a refrigerant circuit of the air conditioning system; opening said communication path between said liquid-gas separator and the refrigerant recovery vessel; and closing the communication path when a measured parameter equals or exceeds the predetermined parameter.

In still another embodiment, a method is provided for controlling leakage of combustible refrigerant in an air conditioning system for vehicles comprising a gas-liquid separator, a refrigerant recovery vessel, and a selectively openable communication path therebetween. The method comprising the steps of: preselecting a predetermined parameter for stopping refrigerant recovery; detecting or predicting a vehicle collision; opening the communication path between the liquid-gas separator and the refrigerant recovery vessel; and closing said communication path when a measured parameter equals or exceeds the predetermined parameter. In these methods, the predetermined parameter may be a predetermined time period during which the communication path is open or a predetermined pressure within the refrigerant recovery vessel, such that the communication path is open when a pressure measured within the refrigerant recovery vessel is less than the predetermined pressure. Further, the air conditioning system may comprise a compressor, and these methods may comprise the step of stopping the compressor when the communication path is open.

In the air conditioning system for vehicles according to the present invention, which air conditioning system uses combustible refrigerant as the refrigerant in a vapor compression-type, refrigerating cycle, the refrigerant may be recovered readily and efficiently without requiring significant changes to the system configuration and substantially at a specification of the present system, and leakage of the combustible refrigerant to outside may be reduced, minimized, or eliminated. Therefore, the risk of fire or explosion due to leakage of combustible refrigerant may be reduced, minimized, or eliminated.

Other objects, features, and advantages of the present invention will be apparent to persons of ordinary skill in the art from the following detailed description of preferred embodiments of the present invention and the accompanying drawings.

For a more complete understanding of the present invention, the needs satisfied thereby, and the objects, features, and advantages thereof, reference now is made to the following description taken in connection with the accompanying drawings.

**Fig. 1** is a schematic diagram of an air conditioning system for vehicles according to an embodiment of the present invention.

**Fig. 2** is a vertical, cross-sectional view of a refrigerant recovery vessel integral with a gas-liquid separator in the system depicted in **Fig. 1.**

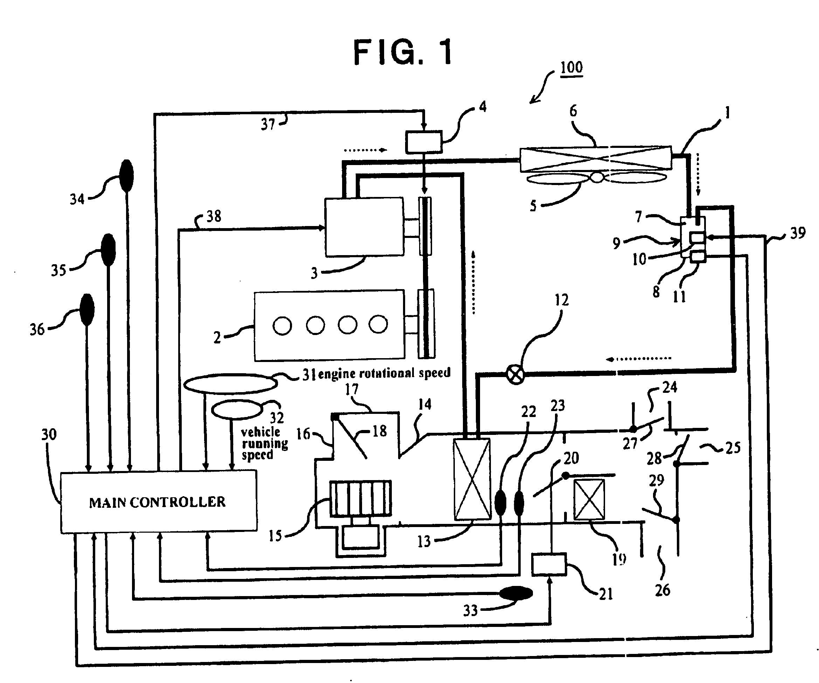

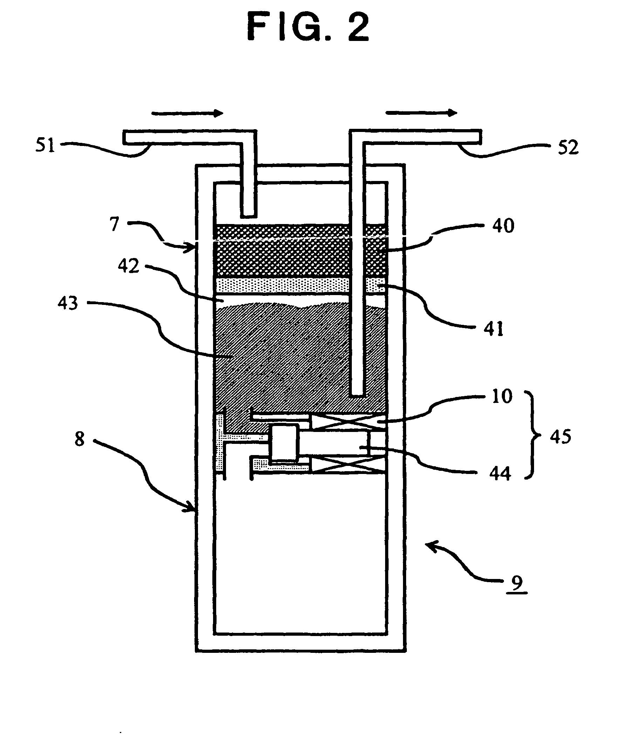

**Fig. 1** depicts an air conditioning system 100 for vehicles according to an embodiment of the present invention. **Fig. 2** depicts a refrigerant recovery vessel 8 integral with a gas-liquid separator 7 used in system 100 depicted in **Fig. 1.** In **Fig. 1,** air conditioning system 100 comprises a vapor compression-type, refrigerating cycle 1 using combustible refrigerant. In vapor compression-type, refrigerating cycle 1, a compressor 3 is driven by an engine (or motor) 2 of a vehicle, which is a variable displacement compressor adapted to alter or adjust its displacement or a fixed displacement compressor. The driving force from engine 2 is transmitted, for example, via an electromagnetic clutch (not shown), and the ON/OFF operation of the electromagnetic clutch is controlled via a clutch controller 4. Compressor 3 may form part of a refrigerating cycle regardless of the presence or absence of such a clutch, and further, the control method of displacement (e.g., adjusting the swash plate angle or varying compressor speed) is not particularly limited. Refrigerant compressed to a relatively high temperature and pressure by compressor 3 is cooled at a condenser 6 having a fan 5 by exchanging heat with outside air, and the refrigerant is condensed and substantially liquefied. Refrigerant exiting condenser 6 is separated into a gaseous-phase portion and a liquid-phase portion by gas-liquid separator 7, and in this embodiment, as described below, gas-liquid separator 7 is integral with refrigerant recovery vessel 8. An electronic solenoid 10 and a pressure sensor 11 are provided to an integral, refrigerant recovery vessel and gas-liquid separator device 9. The liquid refrigerant separated by gas-liquid separator 7 is reduced in pressure and expanded by an expansion valve 12, and, thereafter, is sent to an evaporator 13 as a cooling medium, and heat is exchanged with air sent through an air duct 14. The refrigerant evaporated in evaporator 13 then is drawn into compressor 3, and again compressed. The evaporator exit temperature is controlled by a displacement control signal sent to compressor 3 or by ON/OFF control of the electromagnetic clutch via clutch controller 4.

A blower 15 is disposed in air duct 14 through which air passes for air conditioning of a vehicle interior. An inside air introduction port 16 and an outside air introduction port 17 are provided at an entrance of air duct 14, and a switching damper 18 controls the amount of air drawn from both ports 16 and 17, and the drawn air then is sent toward evaporator 13 by blower 15. A portion of this drawn air having passed through evaporator 13 then is sent to heater 19 disposed downstream of evaporator 13. The amount of air having passed through evaporator 13 and through heater 19 may be adjusted by an air mixing damper 20 to vary the amount of air having passed through evaporator 13 and bypassed heater 19. The degree to which air mixing damper 20 is opened may be adjusted by an air mixing damper actuator 21. In this embodiment, at the exit side of evaporator 13, an evaporator exit air temperature sensor 22 detects the temperature of air having passed through evaporator 13, and a refrigerant leakage detection sensor 23 detects leakage of refrigerant from refrigerating cycle 1 at this position. Refrigerant leakage detection sensor 23 may be disposed at another desired position, and further, another refrigerant leakage detection sensor may be added at another appropriate position. Air conditioning system 100 also may comprise respective air discharge ports 24, 25, and 26 downstream of evaporator 13 within air duct 14, such as air discharge ports for a DEFROST mode, a VENT mode, and a FOOT mode. Air discharge ports 24, 25, and 26 may be selected, and their opening and closing may be controlled by dampers 27, 28, and 29, respectively.

Air conditioning system 100 also may comprise a main controller 30. The signals from the above-described evaporator exit air temperature sensor 22 and refrigerant leakage detection sensor 23 are sent to main controller 30. Further, in this embodiment, a signal indicating engine rotational speed 31, a signal indicating vehicle running speed 32, a signal indicating detected pressure from the above-described pressure sensor 11, a signal indicating detected interior temperature from a vehicle interior temperature sensor 33, a signal indicating detected outside temperature from an outside air temperature sensor 34, a signal indicating the intensity of sunshine integral, from a sunshine sensor 35, and a signal from a collision sensor 36 provided as a vehicle collision detection device capable of detecting or predicting a vehicle collision may be sent to main controller 30. Further, from main controller 30, a clutch signal 37 may be sent to clutch controller 4, a displacement control signal 38 may be sent to compressor 3, and an electromagnetic valve control signal 39 may be sent to electromagnetic solenoid 10, respectively.

**Fig. 2** depicts an example of the structure of integral, refrigerant recovery vessel and gas-liquid separator device 9. A desiccant 40 and a filter 41 are disposed in an upper portion of gas-liquid separator 7, and liquid refrigerant 43 is stored in a space 42 below the filter 41. Refrigerant is introduced into this upper portion through an inlet tube 51, and liquid refrigerant 43 is discharged from liquid refrigerant storing space 42 through an outlet tube 52. Although this structure may not differ significantly from a known, gas-liquid separator, in this embodiment, refrigerant recovery vessel 8 is added to integral device 9 below gas-liquid separator 7 (at a position below liquid refrigerant storing space 42). An electromagnetic valve 45 with a valve 44 operated by electromagnetic solenoid 10 is disposed between liquid refrigerant storing space 42 and refrigerant recovery vessel 8, and communication between liquid refrigerant storing space 42 and refrigerant recovery vessel 8 is controlled by the operation of valve 44 in response to an electromagnetic valve control signal 39 sent from main controller 30 to electromagnetic solenoid 10. In particular, when valve 44 is opened, liquid refrigerant 43 in liquid refrigerant storing space 42 is drawn into refrigerant recovery vessel 8, and when valve 44 is closed, liquid refrigerant 43 is no longer drawn into refrigerant recovery vessel 8. Valve 44 is a normally closed-type valve (e.g., electromagnetic valve) which is opened when electromagnetic solenoid 10 is energized.

With respect to the method for recovering combustible refrigerant in the air conditioning system thus constructed, examples of two embodiments are explained as follows.

In a first embodiment, when a vehicle collision is detected or predicted by collision sensor 36 provided as a vehicle collision detection device, electromagnetic solenoid 10 is energized, and combustible refrigerant in gas-liquid separator 7 is drawn into refrigerant recovery vessel 8. Further, in this recovery, when the pressure detected by pressure sensor 11 equals or exceeds a predetermined value, or, when a predetermined time period expires, electromagnetic solenoid 10 is de-energized, thereby stopping the refrigerant recovery.

In a second embodiment, when a refrigerant leakage is detected by refrigerant leakage detection sensor 23 provided in air conditioning system 100, electromagnetic solenoid 10 is energized, and combustible refrigerant in gas-liquid separator 7 is drawn into refrigerant recovery vessel 8. Further, in this recovery, when the pressure detected by pressure sensor 11 equals or exceeds a predetermined value, or, when a predetermined time period expires, electromagnetic solenoid 10 is de-energized, thereby stopping the refrigerant recovery.

When the above-described embodiments of recovery operations are carried out, the drive of compressor 3 is preferably stopped.

Thus, when there is a risk that combustible refrigerant leaks outside of the refrigerating cycle, or when leakage actually occurs, in order to prevent leakage of a significant amount of refrigerant, the combustible refrigerant is recovered quickly into refrigerant recovery vessel 8. Consequently, the amount of refrigerant leakage may be reduced, minimized, or eliminated, and the ability of the system to reduce the risk of fire or explosion may be significantly enhanced. In this structure, as described above, because integral, refrigerant recovery vessel and gas-liquid separator device 9 may be disposed at a position similar to that at which known, gas-liquid separators have been disposed, the refrigerant recovery may be carried out readily and efficiently without requiring significant changes to the system configuration.

Although refrigerant recovery vessel 8 is integral with gas-liquid separator 7 in the above-described embodiment, these components may be formed separately. Further, a structure may be employed wherein the communication between gas-liquid separator 7 and refrigerant recovery vessel 8 is not enclosed within integral, refrigerant recovery vessel and gas-liquid separator device 9. An external communication path may be provided, and a valve, such as an electromagnetic valve, may be provided in the external communication path.

The present invention may be applied to any vehicle air conditioning system comprising a vapor compression-type, refrigerating cycle and using combustible refrigerant, thereby realizing an air conditioning system for vehicles with a significantly reduced risk of fire or explosion, even if combustible refrigerant is used.

## Claims

1. An air conditioning system (100) for vehicles comprising a vapor compression-type, refrigerating cycle (1), which uses combustible refrigerant and comprises a gas-liquid separator (7), **characterised by** comprising;
a refrigerant recovery vessel (8) in communication with said gas-liquid separator (7) and which recovers said combustible refrigerant in said refrigerating cycle by communication with said gas-liquid separator; and
a valve (44) which controls the communication between said refrigerant recovery vessel and said gas-liquid separator in response to an external signal.

2. The air conditioning system (100) of claim 1, wherein said gas-liquid separator (7) and said refrigerant recovery vessel (8) are integral to each other.

3. The air conditioning system (100) of claim 2, wherein said valve is integral with said gas-liquid separator (7) and said refrigerant recover vessel (8).

4. The air conditioning system (100) of claim 1 or 2, wherein a communication path for communicating between said gas-liquid separator (7) and said refrigerant recovery vessel (8) disposed at a position outside of said gas-liquid separator and said refrigerant recovery vessel, and said valve (44) is disposed in said communication path.

5. The air conditioning system (100) of any preceding claim, arranged such that a time period for recovering refrigerant by opening said valve (44) is set at a predetermined time period, and comprising means for enclosing recovered refrigerant by closing said valve after expiration of said predetermined time period

6. The air conditioning system (100) of any of claims 1 to 4, further comprising a pressure detecting device (11), which detects a pressure in said refrigerant recovery vessel (8) or in said gas-liquid separator, and when refrigerant is recovered by opening said valve (44), said valve is closed in accordance with a detected pressure by said pressure detecting device.

7. The air conditioning system (100) of claim 6, further comprising means for closing said valve when a detected pressure by of said pressure detecting device (11) equals a predetermined pressure.

8. The air conditioning system (100) any preceding claim, further comprising a vehicle collision detection device (36) which detects or predicts a vehicle collision and when the vehicle collision is detected or predicted by said vehicle collision detection device, refrigerant in said gas-liquid separator (7) js recovered into said refrigerant recovery vessel (8) by opening said valve (44).

9. The air conditioning system (100) any preceding claim, further comprising a refrigerant leakage detection device(23), which detects a leakage of refrigerant in said refrigerating cycle, and when the refrigerant leakage is detected by said refrigerant leakage detection device, refrigerant in said gas-liquid separator (7) is recovered into said refrigerant recovery vessel (8) opening said valve (44).

10. The air conditioning system (100) of any preceding claim, wherein, when refrigerant in said gas-liquid separator (7) is recovered into said refrigerant recovery vessel (8) by opening said valve (44), a main controller stops a compressor (3) provided in said refrigerating cycle.

11. The air conditioning system (100) any preceding claim, wherein said valve (44) is a valve driven by an electromagnetic solenoid (10) and said normally, closed-type valve is opened when said electromagnetic solenoid is energized.

12. A method for controlling leakage of refrigerant in an air conditioning system (100) for vehicles comprising a gas-liquid separator (7), a refrigerant recovery vessel (8), and a selectively openable communication path therebetween, said method comprising the steps of:
preselecting a predetermined parameter for stopping refrigerant recovery;
detecting a leakage of refrigerant within a refrigerant circuit of said air conditioning system;
opening said communication path between said liquid-gas separator and said refrigerant recovery vessel; and
closing said communication path when a measured parameter equals or exceeds said predetermined parameter.

13. A method for controlling leakage of combustible refrigerant in an air conditioning system (100) for vehicles comprising a gas-liquid separator (7), a refrigerant recovery vessel (8), and a selectively openable communication path therebetween, said method comprising the steps of;
preselecting a predetermined parameter for stopping refrigerant recovery;
detecting or predicting a vehicle collision;
opening said communication path between said liquid-gas separator and said refrigerant recovery vessel; and
closing said communication path when a measured parameter equals or exceeds said predetermined parameter.

14. The method of claim 12 or 13, wherein said predetermined parameter is a predetermined time period during which said communication path is open.

15. The method of claim 12 or 13, wherein said predetermined parameter is a predetermined pressure within said refrigerant recovery vessel (8), such that said communication path is open when a pressure measured within said refrigerant recovery vessel is less than said predetermined pressure.

16. The method of any of claims 12 to 15, wherein said air conditioning system (100) comprises a compressor (3) and the method further comprises the step of stopping said compressor when said communication path is open.

## Patentansprüche

1. Ein Klimaanlagensystem (100) für Fahrzeuge, aufweisend einen Dampfkompressionstyp-Kühlkreislauf (1), der ein entflammbares Kältemittel verwendet und einen Gas-Flüssigkeits-Trenner (7) aufweist, **dadurch gekennzeichnet, dass** es aufweist:
einen Kältemittelrückgewinnungsbehälter (8), der mit dem Gas-Flüssigkeits-Trenner (7) in Verbindung steht und der das entflammbare Kältemittel in dem Kühlkreislauf durch die Verbindung mit dem Gas-Flüssigkeits-Trenner rückgewinnt; und
ein Ventil (44), das die Verbindung zwischen dem Kältemittelrückgewinnungsbehälter und dem Gas-Flüssigkeits-Trenner reagierend auf ein externes Signal steuert.

2. Das Klimaanlagensystem (100) aus Anspruch 1, wobei der Gas-Flüssigkeits-Trenner (7) und der Kältemittelrückgewinnungsbehälter (8) einstückig ausgeführt sind.

3. Das Klimaanlagensystem (100) aus Anspruch 2, wobei das Ventil mit dem Gas-Flüssigkeits-Trenner (7) und dem Kältemittelrückgewinnungsbehälter (8) einstückig ausgeführt ist.

4. Das Klimaanlagensystem (100) aus Anspruch 1 oder 2, wobei ein Verbindungsweg zur Verbindung zwischen dem Gas-Flüssigkeits-Trenner (7) und dem Kältemittelrückgewinnungsbehälter (8) an einer Position außerhalb des Gas-Flüssigkeits-Trenners und des Kältemittelrückgewinnungsbehälters angeordnet ist, und das Ventil (44) in dem Verbindungsweg angeordnet ist.

5. Das Klimaanlagensystem (100) aus einem der vorhergehenden Ansprüche, das so angeordnet ist, dass eine Zeitdauer zur Rückgewinnung des Kältemittels durch Öffnen des Ventils (44) auf eine vorbestimmte Zeitdauer eingestellt ist, und das Mittel zum Umschließen des rückgewonnenen Kältemittels durch Schließen des Ventils nach Ablauf der vorbestimmten Zeitdauer aufweist.

6. Das Klimaanlagensystem (100) nach einem der Ansprüche 1 bis 4, ferner aufweisend eine Druckerfassungsvorrichtung (11), die einen Druck in dem Kältemittelrückgewinnungsbehälter (8) oder in dem Gas-Flüssigkeits-Trenner erfasst, wobei das Ventil in Übereinstimmung mit einem durch die Druckerfassungsvorrichtung (11) erfassten Druck geschlossen wird, wenn das Kältemittel durch Öffnen des Ventils (44) rückgewonnen wurde.

7. Das Klimaanlagensystem (100) gemäß Anspruch 6, ferner aufweisend Mittel zum Schließen des Ventils, wenn ein durch die Druckerfassungsvorrichtung (11) erfasster Druck gleich einem vorbestimmten Druck wird.

8. Das Klimaanlagensystem (100) gemäß einem der vorhergehenden Ansprüche, ferner aufweisend eine Fahrzeugkollisionserfassungsvorrichtung (36), die eine Fahrzeugkollision erfasst oder vorhersagt, wobei, wenn die Fahrzeugkollision durch die Fahrzeugkollisionserfassungsvorrichtung erfasst oder vorhergesagt wurde, das Kältemittel in dem Gas-Flüssigkeits-Trenner (7) durch Öffnen des Ventils (44) in den Kältemittelrückgewinnungsbehälter (8) rückgewonnen wird.

9. Das Klimaanlagensystem (100) gemäß einem der vorhergehenden Ansprüche, ferner aufweisend eine Kältemittelleckageerfassungsvorrichtung (23), die eine Leckage des Kältemittels in dem Kühlkreislauf erfasst, wobei, wenn durch die Kältemittelleckageerfassungsvorrichtung eine Kältemittelleckage erfasst wurde, das Kältemittel in dem Gas-Flüssigkeits-Trenner (7) durch Öffnen des Ventils (44) in den Kältemittelrückgewinnungsbehälter (8) rückgewonnen wird.

10. Das Klimaanlagensystem (100) gemäß einem der vorhergehenden Ansprüche, wobei dann, wenn das Kältemittel in dem Gas-Flüssigkeits-Trenner (7) in den Kältemittelrückgewinnungsbehälter (8) durch Öffnen des Ventils (44) zurückgewonnen wurde, eine Hauptsteuervorrichtung einen Kompressor (3) , der in dem Kühlkreislauf vorgesehen ist, anhält.

11. Das Klimaanlagensystem (100) gemäß einem der vorhergehenden Ansprüche, wobei das Ventil (44) ein durch ein elektromagnetisches Solenoid (10) angetriebenes Ventil ist und das selbstschließende Ventil geöffnet wird, wenn das elektromagnetisches Solenoid (10) angeregt wird.

12. Ein Verfahren zur Steuerung einer Kältemittelleckage in einem Klimaanlagensystem (100) für Fahrzeuge, das einen Gas-Flüssigkeits-Trenner (7), einen Kältemittelrückgewinnungsbehälter (8) und einen gesondert öffenbaren Verbindungsweg dort dazwischen aufweist, wobei das Verfahren die Schritte aufweist :
Vorauswählen eines vorbestimmten Parameters zum Beenden einer Kältemittelrückgewinnung;
Erfassen einer Leckage eines Kältemittels innerhalb eines Kühlkreislaufs des Klimaanlagensystems;
Öffnen des Verbindungswegs zwischen dem Flüssigkeits-Gas-Trenner und dem Kältemittelrückgewinnungsbehälter; und
Schließen des Verbindungswegs, wenn ein gemessener Parameter gleich oder größer als ein vorbestimmter Parameter wird.

13. Ein Verfahren zur Steuerung der Leckage eines entflammbaren Kältemittels in einem Klimaanlagensystem (100) für Fahrzeuge, das einen Gas-Flüssigkeits-Trenner (7), einen Kältemittelrückgewinnungsbehälter (8) und einen gesondert öffenbaren Verbindungsweg dort dazwischen aufweist, wobei das Verfahren die Schritte aufweist:
Vorauswählen eines vorbestimmten Parameters zum Beenden einer Kältemittelrückgewinnung;
Erfassung oder Vorhersage einer Fahrzeugkollision;
Öffnen des Verbindungswegs zwischen dem Flüssigkeits-Gas-Trenner und dem Kältemittelrückgewinnungsbehälter; und
Schließen des Verbindungswegs, wenn ein gemessener Parameter gleich oder größer als der vorbestimmte Parameter wird.

14. Das Verfahren aus Anspruch 12 oder 13, wobei der vorbestimmte Parameter eine vorbestimmte Zeitdauer ist, während der der Verbindungsweg offen ist.

15. Das Verfahren gemäß Anspruch 12 oder 13, wobei der vorbestimmte Parameter ein vorbestimmter Druck innerhalb des Kältemittelrückgewinnungsbehälters (8) ist, so dass der Verbindungsweg geöffnet ist, wenn ein in dem Kältemittelrückgewinnungsbehälter gemessener Druck kleiner als der vorbestimmte Druck ist.

16. Das Verfahren gemäß einem der Ansprüche 12 bis 15, wobei das Klimaanlagensystem (100) einen Kompressor (3) aufweist und das Verfahren ferner den Schritt des Anhaltens des Kompressors (3) aufweist, wenn der Verbindungsweg offen ist.

## Revendications

1. Système de climatisation (100) pour véhicules, comprenant un cycle de réfrigération (1) de type à compression de vapeur, qui utilise un fluide frigorigène combustible et comprend un séparateur gaz-liquide (7),
**caractérisé en ce qu'**il comprend :
- un réservoir collecteur de fluide frigorigène (8) en communication avec le séparateur gaz-liquide (7) et qui récupère le fluide frigorigène combustible dans le cycle de réfrigération en communicant avec le séparateur gaz-liquide ; et
- une vanne (44) qui contrôle la communication entre le réservoir collecteur de fluide frigorigène et le séparateur gaz-liquide en réponse à un signal externe.

2. Système de climatisation (100) selon la revendication 1,
dans lequel
le séparateur gaz-liquide (7) et le réservoir collecteur de fluide frigorigène (8) sont intégrés l'un à l'autre.

3. Système de climatisation (100) selon la revendication 2,
dans lequel
la vanne fait partie intégrante du séparateur gaz-liquide (7) et du réservoir collecteur de fluide frigorigène (8).

4. Système de climatisation (100) selon la revendication 1 ou 2,
dans lequel
un chemin de communication entre le séparateur gaz-liquide (7) et le réservoir collecteur de fluide frigorigène (8), est disposé à un endroit se trouvant à l'extérieur du séparateur gaz-liquide et du réservoir collecteur de fluide frigorigène, la vanne (44) étant disposée dans ce chemin de communication.

5. Système de climatisation (100) selon l'une des revendications précédentes
disposé de façon qu'une période de temps nécessaire pour récupérer le fluide frigorigène par ouverture de la vanne (44,), soit réglée à une période de temps prédéterminée,
et comprenant des moyens pour enfermer le fluide frigorigène récupéré par fermeture de la vanne après expiration de la période de temps prédéterminée.

6. Système de climatisation (100) selon l'une des revendications 1 à 4, comprend en outre
un dispositif de détection de pression (11) qui détecte la pression régnant dans le réservoir collecteur de fluide frigorigène (8) ou dans le séparateur gaz-liquide, de façon que lorsque le fluide frigorigène est récupéré par ouverture de la vanne (44), celle-ci soit fermée suivant la pression détectée par le dispositif de détection de pression.

7. Système de climatisation (100) selon la revendication 6, comprenant en outre
des moyens pour fermer la vanne lorsque la pression détectée par le dispositif de détection de pression (11) est égale à une pression prédéterminée.

8. Système de climatisation (100) selon l'une des revendications précédentes,
comprenant en outre
un dispositif de détection de collision de véhicule (36) qui détecte ou prédit une collision du véhicule, de façon que, lorsque la collision du véhicule est détectée ou prédite par le dispositif de détection de collision du véhicule, le fluide frigorigène se trouvant dans le séparateur gaz-liquide (7) soit récupéré dans le réservoir collecteur de fluide frigorigène (8) par ouverture de la vanne (44).

9. Système de climatisation (100) selon l'une des revendications précédentes,
comprenant en outre
un dispositif de détection de fuite de fluide frigorigène (23) qui détecte une fuite de fluide frigorigène dans le cycle de réfrigération, de façon que, lorsque la fuite de fluide frigorigène est détectée par le dispositif de détection de fuite frigorigène, le fluide frigorigène se trouvant dans le séparateur gaz-liquide (7) soit récupéré dans le réservoir collecteur de fluide frigorigène (8) par ouverture de la vanne (44).

10. Système de climatisation (100) selon l'une des revendications précédentes,
dans lequel
lorsque le fluide frigorigène se trouvant dans le séparateur gaz-liquide (7) est récupéré dans le réservoir collecteur de fluide frigorigène (8) par ouverture de la vanne (44), un contrôleur principal stoppe un compresseur (3) prévu dans le cycle de réfrigération.

11. Système de climatisation (100) selon l'une des revendications précédentes,
dans lequel
la vanne (44) est une vanne commandée par un solénoïde électromagnétique (10) et cette vanne, de type normalement fermé, est ouverte lorsque le solénoïde électromagnétique est excité.

12. Procédé pour contrôler une fuite de fluide frigorigène dans un système de climatisation pour véhicules (100) comprenant un séparateur gaz-liquide (7), un réservoir collecteur de fluide frigorigène (8), et un chemin de communication ouvrable sélectivement entre les deux,
comprenant les étapes consistant à :
- présélectionner un paramètre prédéterminé pour stopper la récupération de fluide frigorigène ;
- détecter une fuite de fluide frigorigène à l'intérieur d'un circuit de fluide frigorigène du système de climatisation ;
- ouvrir le chemin de communication entre le séparateur gaz-liquide et le réservoir collecteur de fluide frigorigène ; et
- fermer le chemin de communication lorsqu'un paramètre mesuré est égal ou supérieur au paramètre prédéterminé.

13. Procédé pour contrôler une fuite de fluide frigorigène combustible dans un système de climatisation pour véhicules (100) comprenant un séparateur gaz-liquide (7), un réservoir collecteur de fluide frigorigène (8), et un chemin de communication ouvrable sélectivement entre les deux,
comprenant les étapes consistant à :
- présélectionner un paramètre prédéterminé pour stopper la récupération de fluide frigorigène ;
- détecter ou prédire une collision du véhicule ;
- ouvrir le chemin de communication entre le séparateur gaz-liquide et le réservoir collecteur de fluide frigorigène ; et
- fermer le chemin de communication lorsqu'un paramètre mesuré est égal ou supérieur au paramètre prédéterminé.

14. Procédé selon la revendication 12 ou 13,
dans lequel
le paramètre prédéterminé est une période temps prédéterminé durant laquelle le chemin de communication est ouvert.

15. Procédé selon la revendication 12 ou 13,
dans lequel
le paramètre prédéterminé est une pression prédéterminée à l'intérieur du réservoir collecteur de fluide frigorigène (8), de façon que le chemin de communication soit ouvert lorsqu'une pression mesurée à l'intérieur du réservoir collecteur de fluide frigorigène est inférieure à la pression prédéterminée.

16. Procédé selon l'une des revendications 12 à 15,
dans lequel
le système de climatisation (100) comprend un compresseur (3) et le procédé comprend en outre l'étape consistant à stopper le compresseur lorsque le chemin de communication est ouvert.
